# EUROPÄISCHE PATENTSCHRIFT

(11) **EP 3 631 213 B1**
(45) Veröffentlichungstag und Bekanntmachung des Hinweises auf die Patenterteilung: **09.11.2022**
(21) Anmeldenummer: 18725821.5
(22) Anmeldetag: 17.05.2018
(51) Int. Cl.: F16B 2/24, B60R 21/00, F16B 5/12, F16B 21/07

(54) **BEFESTIGUNGSSYSTEM**
FASTENING SYSTEM
SYSTÈME DE FIXATION

(30) Priorität: 22.05.2017 DE 102017004874
(43) Veröffentlichungstag der Anmeldung: 08.04.2020
(73) Patentinhaber: A Raymond Et Cie, 38000 Grenoble (FR)
(72) Erfinder: RHEIN, Axel, 79585 Steinen (DE); ECKERT, Thomas, 79713 Bad Säckingen (DE); HERRBACH, Florian, 67220 Triembach-au-Val (FR)
(74) Vertreter: König Szynka Tilmann von Renesse Patentanwälte Partnerschaft mbB Düsseldorf
(86) Internationale Anmeldenummer: PCT/EP2018/062881
(87) Internationale Veröffentlichungsnummer: WO 2018/215279

(56) Entgegenhaltungen:
- EP-A1- 3 156 668
- DE-A1-102008 052 966
- US-A- 3 132 727
- US-A- 3 759 555
- US-A1- 2011 250 037

## Beschreibung

Die Erfindung betrifft eine Vorrichtung zum Halten eines an einem Bauteil angeordneten Kopfs. Ferner betrifft die Erfindung ein Federelement, das in einer solchen Vorrichtung eingesetzt werden kann. Ferner betrifft die Erfindung ein System mit einer derartigen Vorrichtung und einem Bauteil mit einem Kopf. Schließlich betrifft die Erfindung ein Verfahren zum Herausziehen des Kopfes und die Verwendung der Vorrichtung, des Federelements oder des Systems zur Durchführung des Verfahrens.

In Fahrzeugen ist es notwendig, verschiedene Bauteile zu verbinden, die teilweise am Rahmen des Fahrzeugs oder an anderen tragenden Elementen gehaltert werden. Die Bauteile können beispielsweise Verkleidungselemente, Elemente der Antriebseinheit oder des Fahrwerks sein. Insbesondere im Frontbereich ist eine Halterung von Verkleidungselementen erforderlich, welche sich im Falle einer übererhöhten Belastung, beispielsweise im Falle eines Unfalls, lösen. Dies kann zu einer Reduktion von Verletzungen insbesondere von Fußgängern führen. Gleichzeitig besteht jedoch die Forderung nach einer Optimierung der Fahreigenschaften eines Fahrzeugs mit Hilfe von Anbauteilen, die auch bei den bei Hochgeschwindigkeitsfahrten auf die Front des Fahrzeugs lastenden Drücken sicher am Fahrzeug gehalten werden müssen.

Aus JP 8128415 A2 ist ein Halter zum Befestigen von Bauteilen mit einem länglichen, zylinderförmigen Halteelement, insbesondere in Form von Rohrleitungen und/oder Kabeln an einer Fahrzeugkarosserie oder einem Fahrzeugchassis bekannt, bei dem zwei biegbar miteinander verbundene Seiten vorgesehen sind, zwischen denen ein Verbindungsmittel wirkt, um zwei gegenüberliegende Klemmabschnitte festzuhalten, von denen einer auch Teil einer Karosserie sein kann. Die Form des biegbaren Elements ist so gestaltet, dass ein Einrasten oder lösen des zylinderförmigen Bauteils erst oberhalb einer gewissen Kraft ermöglicht wird.

Die LU 45727 A offenbart ebenfalls einen Halter zum Befestigen von zylinderförmigen Bauteilen, insbesondere Kabel, wobei der Halter zwei abschnittweise kreisförmige Federarme aufweist, in dem ein Bauteil eingerastet werden kann. Auch dieser Halter erfordert eine gewisse Kraft oder Grenzkraft zum Einrasten oder Lösen des zylinderförmigen Bauteils. Ein Deckel zum Verriegeln ist vorgesehen, um die Rückhaltekraft zu erhöhen und ein Lösen des Bauteils aus den Federarmen zu verhindern oder zu erschweren. Nachteilig bei den aufgeführten Haltern ist, dass diese häufig keine dauerhaft stabile Befestigung gegenüber Vibrationen und leichten bis mittelstarken Stößen ermöglichen. Zudem sind die Haltekräfte relativ begrenzt, so dass größere und/oder schwerere Bauteile nicht gehalten werden können. Typischerweise lässt sich die Kraft zum Lösen der Befestigung nur mit stärkeren Federarmen erhöhen, was jedoch zu einer erhöhten Kraft zum Einrasten führt. Weiterhin bieten die vorgenannten Halter nur unzureichende Möglichkeiten zur Führung in eine Einrastposition. Die LU 45727 A ermöglicht lediglich über ein Deckelelement, welches zusätzlich montiert werden muss, eine Erhöhung der Rückhaltekraft.

Die EP 3 156 668 A1 betrifft einen Befestigungsclip und eine Befestigungsmethode. Die DE 10 2008 052 966 A1 betrifft eine Befestigungsanordnung an Fahrzeugen.

Aufgabe der Erfindung ist es, einzelne Elemente für ein System zu schaffen, das ein Bauteil mit einem Kopf aufweist, mit denen der Kopf bis zu einer festgelegten Zugkraft sicher in einer Aufnahme gehalten werden kann, zugleich jedoch die Möglichkeit besteht, bei erhöhten Zugkräften ein sicheres Lösen des Kopfs aus der Aufnahme zu ermöglichen, während weiterhin die Möglichkeit besteht, bei der Montage des Systems den Kopf leicht in die Aufnahme einzuführen.

Die Aufgabe wird durch die Vorrichtung gemäß Anspruch 1, das Federelement gemäß Anspruch 2, das System gemäß Anspruch 9 sowie das Verfahren gemäß Anspruch 11 und die Verwendung gemäß Anspruch 12 gelöst. Vorteilhafte Ausführungsformen sind in den Unteransprüchen beansprucht und ergeben sich aus der nachfolgenden Beschreibung der Erfindung.

Kern der Erfindung ist es, das Federelement gemäß der Erfindung so auszugestalten, dass es ein leichtes Einführen des Kopfes durch ein - im für das Einführen des Kopfes notwendigen Maß - freies Zurückschwenken eines Blockadeabschnitts und eines einen Teil der Aufnahme bildenden, gebogen oder geknickt ausgeführten Aufnahmeabschnitts zu ermöglichen, während der die Aufnahme in Auszugsrichtung des Kopfs abschließende Blockadeabschnitt das Herausziehen des Kopfs bis zu einer elastischen oder vorzugsweise bis zu einer plastischen Deformation des Blockadeabschnitts blockiert.

Das erfindungsgemäße System weist ein Bauteil mit Kopf auf, vorzugsweise mit einem Stift und einem am Ende des Stifts des Bauteils angeordneten Kopf sowie eine Vorrichtung zum Halten des Kopfs, wobei die Vorrichtung einen Aufnahmeraum, der eine Öffnung aufweist, über die der Kopf von außen in den Aufnahmeraum eingeführt werden kann, und ein in dem Aufnahmeraum angeordnetes Federelement und einen in dem Aufnahmeraum angeordneter Wegbegrenzer aufweist.

Zur einfacheren Bezugnahme wird die Gerade, die den geometrischen Mittelpunkt der Öffnung mit dem geometrischen Mittelpunkt der Aufnahme verbindet als eine Bezugsgerade bezeichnet und die Ebene, die den geometrischen Mittelpunkt der Öffnung enthält und senkrecht zur Bezugsgeraden steht, als Bezugsebene bezeichnet. Bei einer bezüglich eines in der Öffnung liegenden Punkts oder bezüglich einer durch die Öffnung führenden Geraden symmetrisch ausgeführten Öffnung wird dieser Punkt, bzw. der Punkt, an dem die Gerade die Ebene, in der die Öffnung liegt, schneidet als geometrischer Mittelpunkt der Öffnung verstanden. Fehlt ein solcher Punkt, weil die Öffnung nicht symmetrisch ausgeführt ist, so wird als geometrischer Mittelpunkt der Flächenmittelpunkt der Durchtrittsfläche der Öffnung oder der Massenschwerpunkt des von den die Öffnung begrenzenden Wänden begrenzten Volumens als geometrischer Mittelpunkt der Öffnung verwendet. Der geometrische Mittelpunkt der Aufnahme ist bei einer Ausführung der Aufnahme mit gebogenem Aufnahmeabschnitt der Mittelpunkt, um den der gebogene Aufnahmeabschnitt gebogen ist. Bei einer Ausführung der Aufnahme mit geknickt ausgeführtem Aufnahmeabschnitt ist der Mittelpunkt der Aufnahme ein Punkt, in dem sich eine Flächennormale zu einem ersten, den geknickt ausgeführten Aufnahmeabschnitt bildenden Abschnitt mit einer Flächennormale zu einem zweiten, zusammen mit dem anderen Abschnitt den geknickt ausgeführten Aufnahmeabschnitt bildenden Abschnitt schneidet. Wird die Aufnahme durch mehrere Aufnahmeabschnitte begrenzt, so ist der geometrische Mittelpunkt der Aufnahme der Flächenmittelpunkt der von den Aufnahmeabschnitten eingeschlossenen Fläche.

Zur einfacheren Bezugnahme wird die Erfindung zudem so beschrieben, dass die Öffnung des Aufnahmeraums relativ zu den anderen Teilen des Aufnahmeraums und relativ zum Federelement oben angeordnet ist und der Kopf über die Öffnung von oben nach unten in den Aufnahmeraum eingeschoben wird. Diese Art der Beschreibung schränkt die Erfindung jedoch nicht auf derartige Bauformen ein und erfolgt allein zur einfacheren Bezugnahme. Natürlich sind auch Bauformen denkbar, bei denen die Öffnung seitwärts des Aufnahmeraums angeordnet ist und der Kopf seitwärts über die Öffnung in den Aufnahmeraum geschoben wird oder die Öffnung am unteren Ende des Aufnahmeraums angeordnet ist und der Kopf von unten nach oben über die Öffnung in den Aufnahmeraum eingeschoben wird.

Die erfindungsgemäße Vorrichtung ist zum Halten eines an einem Bauteil, vorzugsweise am Ende eines Stifts eines Bauteils angeordneten Kopfs geeignet und das erfindungsgemäße System weist ein Bauteil mit einem Kopf, vorzugsweise einem Stift und einem am Ende des Stifts des Bauteils angeordneten Kopf auf.

Der in einer bevorzugten Ausführungsform vorgesehene Stift ist insbesondere bevorzugt ein Teil des Bauteils, der eine größere Längserstreckung als Breite aufweist. Der Stift kann zum Kopf hin zulaufend ausgeführt sein, weist in einer bevorzugten Ausführungsform jedoch einen konstanten, vorzugsweise kreisförmigen, elliptischen, rechteckigen, insbesondere quadratischen Querschnitt auf. Der Kopf weist zumindest in eine Richtung senkrecht zur Längserstreckung des Stifts, insbesondere bevorzugt in alle Richtungen senkrecht zur Längserstreckung des Stifts eine größere Breite auf, als die Breite des Stifts im Übergang des Stifts zum Kopf. Insbesondere bevorzugt weist der Kopf zumindest in eine Richtung senkrecht zur Längserstreckung des Stifts, insbesondere bevorzugt in alle Richtungen senkrecht zur Längserstreckung des Stifts eine größere Breite auf, als die größte Breite des Stifts. Der Kopf kann kugelförmig oder ellipsoid ausgeführt sein. Er kann jedoch auch die Form von zwei an ihrer jeweiligen Basis aneinandergesetzter Kegeln, Kegelstümpfe, Pyramiden oder Pyramidenstümpfe aufweisen. Es ist insbesondere bevorzugt, wenn sich der Kopf zum Stift hin und vom Stift fort verjüngt. Eine Verjüngung vom Stift fort ermöglicht ein einfacheres Einführen des Kopfs in die Aufnahme. Eine Verjüngung zum Stift hin kann beim Herausziehen des Kopfs aus der Aufnahme helfen.

Der Kopf kann auch durch einen auf einer Basisplatte angebrachten, sich senkrecht zur Bezugsgeraden erstreckenden Zylinder gebildet werden. Es ist beispielsweise denkbar, dass das den Kopf aufweisende Bauteil eine Basisplatte aufweist, die sich in einer Ebene parallel zu Bezugsgeraden hinter den Aufnahmeraum schiebt, beispielsweise einen seitwärts offenen Aufnahmeraum verschließt. Von dieser Basisplatte kann sich ein den Kopf bildender Zylinder senkrecht zur Bezugsachse erstrecken. Ist die Öffnung am Aufnahmeraum einseitig offen, nämlich zur Basisplatte hin offen, so kann der an der Basisplatte befestigte als Zylinder ausgeführte Kopf mit der Bewegung der Basisplatte durch die Öffnung in den Aufnahmeraum geschoben werden. Der Zylinder kann in seinem Querschnitt kreisförmig oder ringförmig (bei einem Hohlzylinder), insbesondere kreisringförmig oder elliptisch, quadratisch, mehreckig oder polygon ausgeführt sein. Er kann jedoch auch im Querschnitt die Form von zwei an ihrer jeweiligen Basis aneinandergesetzter Dreiecken oder Trapezen aufweisen. Es ist insbesondere bevorzugt, wenn sich der Kopf in Richtung der Bezugsgeraden verjüngt. Eine Verjüngung in die eine Richtung der Bezugsgeraden ermöglicht ein einfacheres Einführen des Kopfs in die Aufnahme. Eine Verjüngung in die andere Richtung der Bezugsgeraden kann beim Herausziehen des Kopfs aus der Aufnahme helfen.

Die Vorrichtung weist einen Aufnahmeraum auf, in dem ein Federelement angeordnet ist. Dabei weist der Aufnahmeraum eine Öffnung auf, über die der Kopf von außen in den Aufnahmeraum eingeführt werden kann. Der Aufnahmeraum kann mit Ausnahme der Öffnung in alle Richtungen geschlossen ausgeführt sein. Es sind auch Ausführungsformen denkbar, bei denen der Aufnahmeraum - mit Ausnahme der Öffnung - nur in alle Richtungen in einem zweidimensionalen Koordinatensystem geschlossen ausgeführt ist und in eine oder beide Richtungen senkrecht zum zweidimensionalen Koordinatensystem offen ausgeführt ist. Eine wesentliche Aufgabe des Aufnahmeraums ist es, das Federelement in einem vordefinierten Raum zu halten und Stützflächen bereitzustellen, an denen sich das Federelement bei Druck- oder Zugkrafteinwirkung auf das Federelement abstützen kann. Insofern kann es für die Ausbildung des Aufnahmeraums bereits ausreichen, wenn dieser durch die Lage des Federelements definierende Stützflächen gebildet wird, wobei diese Stützflächen nicht zwingend zur Bildung einer geschlossenen Begrenzungswand des Aufnahmeraums ineinander übergehen müssen und somit auch eine lückenhafte, abschnittweise Begrenzung des Aufnahmeraums gebildet werden kann. In einer bevorzugten Ausführungsform sind die Begrenzungswände des Aufnahmeraums - auch wenn sie Lücken zwischen sich aufweisen - so ausgerichtet, dass sie zumindest Teile der Seiten, vorzugsweise die ganzen Seiten eines Rechtecks bilden, so dass der Aufnahmeraum zumindest in einem zweidimensionalen Koordinatensystem rechteckig ausgeführt ist.

Die Öffnung des Aufnahmeraums kann symmetrisch ausgeführt sein und beispielsweise kreisförmig, elliptisch, rechteckig, polygonal und insbesondere bevorzugt quadratisch ausgeführt sein.

Das in der Vorrichtung eingesetzte Federelement kann ein erfindungsgemäßes Federelement sein und insbesondere bevorzugt weist auch das erfindungsgemäße Federelement die in diesem Abschnitt beschriebenen Merkmale auf. Zumindest weist das in der Vorrichtung eingesetzte Federelement eine Aufnahme für den Kopf des Bauteils auf und als Teil der Aufnahme einen gebogen oder geknickt ausgeführten Aufnahmeabschnitt eines Federarms des Federelements. Der gebogen oder geknickt ausgeführte Aufnahmeabschnitt weist zumindest einen Distanzpunkt auf, der im Vergleich zu anderen Punkten entlang der Erstreckung des gebogen oder geknickt ausgeführten Aufnahmeabschnitts maximal von der Bezugsgeraden entfernt angeordnet ist. Ferner ist bei dem Federelement in Bezug auf die Lage des Aufnahmeabschnitts relativ zur der Bezugsebene gesehen näher an der Bezugsebene als der Aufnahmeabschnitt ein Blockadeabschnitt des Federarms vorgesehen, zu dem der gebogen oder geknickt ausgeführte Aufnahmeabschnitt als Rücksprung ausgebildet ist.

Aufgabe der Aufnahme mit dem gebogen oder geknickt ausgeführten Aufnahmeabschnitt des Federarms im Zusammenspiel mit dem Blockadeabschnitt des Federarms, zu dem der gebogen oder geknickt ausgeführte Aufnahmeabschnitt in Einschieberichtung des Kopfs einen Rücksprung darstellt, ist es, den eingeschobenen Kopf zu halten und durch den zum Blockadeabschnitt hinführenden Bogen oder Knick des Aufnahmeabschnitts einen Teil des Federelements zu bilden, der den Kopf hintergreift und verhindert, dass der Kopf ohne Weiteres wieder aus der Aufnahme gezogen werden kann.

Es hat sich gezeigt, dass diese Funktion bereits mit einer Aufnahme erfüllt werden kann, die nur einen einzigen gebogen oder geknickt ausgeführten Aufnahmeabschnitt aufweist. Insbesondere dann, wenn die Bewegung eines in einer bevorzugten Ausführungsform vorgesehenen Stifts, an dessen Ende der Kopf angeordnet ist, durch eine Führung so geführt ist, dass sie nur in Richtung der Längserstreckung des Stifts erfolgt und ein Kippen des Stifts verhindert wird, kann es zum Halten des Kopfs in der Aufnahme ausreichen, den Kopf nur auf einer Seite mit dem zum Blockadeabschnitt hinführenden Bogen oder Knick des Aufnahmeabschnitts und mit dem Blockadeabschnitt zu hintergreifen. Bereits ein solches einseitiges Hintergreifen kann das gewünschte Zurückhalten des Kopfs bis zu einer Kraftschwelle, ab der der Blockadeabschnitt elastisch, bzw. insbesondere bevorzugt plastisch verformt wird und das Herausziehen ermöglicht, erlauben. In einer besonders bevorzugten Ausführungsform weist das Federelement jedoch zwei, jeweils einen Teil der Aufnahme bildende Aufnahmeabschnitte auf, von denen zumindest einer gebogen oder geknickt, vorzugsweise beide gebogen oder geknickt ausgeführt sind, und die vorzugsweise dazu vorgesehen sind, an unterschiedlichen Seiten in Anlage mit dem Kopf zu kommen und dazu insbesondere bevorzugt einander gegenüberliegend ausgeführt sind.

Der Distanzpunkt eines gebogen ausgeführten Aufnahmeabschnitts ist insbesondere bevorzugt der Scheitelpunkt des gebogen ausgeführten Aufnahmeabschnitts. Insbesondere bevorzugt weist ein gebogen ausgeführter Aufnahmeabschnitt einen Bereich auf, in dem der Radius des Bogens konstant ist. Insbesondere bevorzugt ist der Distanzpunkt in diesem Bereich des Bogens ausgebildet.

Der Distanzpunkt eines geknickt ausgeführten Aufnahmeabschnitts ist insbesondere bevorzugt der Scheitelpunkt des Knicks. Der geknickt ausgeführte Aufnahmeabschnitt wird insbesondere bevorzugt durch zwei in einem Winkel zueinander verlaufende, geradlinige Unterabschnitte des Aufnahmeabschnitts gebildet, die im Knick aneinanderstoßen.

Der Blockadeabschnitt des Federarms stellt den Teil des Federarms dar, der am weitesten in der zum Distanzpunkt gegenüberliegenden Richtung angeordnet ist, also der Abschnitt des Federarms ist, der den Kopf am meisten hintergreift.

Der Wegbegrenzer ist in Bezug auf seine Lage relativ zur der Bezugsebene näher an der Bezugsebene angeordnet als der Distanzpunkt des Aufnahmeabschnitts.

In Bezug auf die Lage des Blockadeabschnitts relativ zur Bezugsebene näher an der Bezugsebene als der Blockadeabschnitt ist ein Gelenkabschnitt des Federarms vorgesehen, der ein Verschwenken des Aufnahmeabschnitts gegen eine Rückstellkraft, die bei einem verschwenkten Aufnahmeabschnitt in Richtung auf eine Ausgangslage wirkt, ermöglicht, wobei dieses Verschwenken des Aufnahmeabschnitts es ermöglicht, dass ein zwischen dem Blockadeabschnitt und dem Distanzpunkt liegender Teil des Federarms in Anlage mit dem Wegbegrenzer kommt.

Der Gelenkabschnitt kann so ausgeführt sein, dass er einen Drehpunkt definiert, um den der gebogen oder geknickt ausgeführte Aufnahmeabschnitt schwenkt, beispielsweise in der Form, dass der Distanzpunkt sich dabei entlang einer Kreisbahn um den Drehpunkt bewegt. Insbesondere bevorzugt für das Einschieben des Kopfes in die Aufnahme wird der Bewegung des Distanzpunkts entlang einer Kreisbahn jedoch noch eine Bewegungskomponente hinzugefügt, bei der der Distanzpunkt noch weiter, als von der Kreisbahn vorgegeben, von der Öffnung des Aufnahmeraums fortbewegt wird. Das kann beispielsweise dadurch erreicht werden, dass der Gelenkabschnitt einen ersten Biegeabschnitt zwischen zwei insbesondere bevorzugt geradlinig ausgeführten Abschnitten des Federelements und einen zweiten, mit dem ersten Biegeabschnitt über einen sich in eine Längsrichtung erstreckenden, insbesondere bevorzugt geradlinig ausgeführten Abschnitt des Federelements verbundenen Biegeabschnitt aufweist. Ergänzend oder alternativ kann dies dadurch erreicht werden, dass der Gelenkabschnitt ein bogenförmig ausgeführter Abschnitt des Federelements ist (wobei die Bogenform auch durch die Hintereinanderschaltung zweier Biegeabschnitte erreicht werden kann), wobei die Biegung des Bogens bei Krafteinwirkung auf ein Ende des Gelenkabschnitts enger werden kann und somit eine Bewegung dieses Endes des Gelenkabschnitts weiter nach unten (weiter von der Öffnung fort) erlaubt.

Indem ein Verschwenken des Aufnahmeabschnitts in der Weise ermöglicht wird, dass ein zwischen dem Blockadeabschnitt und dem Distanzpunkt liegender Teil des Federarms in Anlage mit dem Wegbegrenzer kommt, kann in besonders bevorzugter Ausführungsform verhindert werden, zumindest aber erschwert werden, dass der Distanzpunkt entlang des Wegbegrenzers in Richtung auf die Öffnung bewegt wird. Damit wird ein im Verhältnis zur Lage des Blockadeabschnitts entfernter von der Öffnung angeordneter Teil des Federarms zurückgehalten, wodurch die elastische oder insbesondere bevorzugte plastische Deformation des Blockadeabschnitts gefördert wird, die weniger gefördert würde, wenn der Kopf den Blockadeabschnitt einfach und ohne dass dieser zurückgehalten würde in Richtung auf die Öffnung vor sich her schieben könnte.

In einer bevorzugten Ausführungsform wird der Aufnahmeraum zumindest durch eine unten angeordnete Basisfläche und eine oben angeordnete, der Basisfläche zugewandten Stopperfläche begrenzt, wobei sich an die Stopperfläche die Öffnung anschließt, wobei das Federelement derart in dem Aufnahmeraum angeordnet ist, dass es sich in einer Ausgangslage mit seiner Basis an der Basisfläche abstützt und mit seinem Stopperabschnitt an der Stopperfläche abstützt oder der Stopperabschnitt beabstandet von der Stopperfläche angeordnet ist, aber in Kontakt mit der Stopperfläche gebracht werden kann, wenn der Blockadeabschnitt in eine von der Basis fortweisenden Richtung bewegt wird. Insbesondere bevorzugt ist der Blockadeabschnitt unterhalb der Öffnung angeordnet. Mit der Basisfläche und der Stopperfläche legt der Aufnahmeraum somit die Lage des Federelements in zwei gegenläufigen Richtungen fest, entweder genau, nämlich dann, wenn das Federelement mit Basis und Stopperabschnitt an der Basisfläche, bzw. der Stopperfläche anliegt oder zumindest auf einen definierten Bereich, wenn das Federelement entweder nicht mit der Basis an der Basisfläche oder nicht mit dem Stopperabschnitt an der Stopperfläche anliegt, somit mit Spiel in dem Aufnahmeraum angeordnet ist.

In einer bevorzugten Ausführungsform ist der Aufnahmeraum bezüglich einer Ebene, vorzugsweise der Ebene, die die Bezugsgerade enthält, spiegelsymmetrisch ausgeführt.

In einer bevorzugten Ausführungsform weist der Aufnahmeraum eine zweite Stopperfläche auf, die bezüglich der (ersten) Stopperfläche auf der gegenüberliegenden Seite der Öffnung angeordnet ist. Bei einer solchen Ausführungsform ist das Federelement insbesondere bevorzugt mit einem zweiten Stopperabschnitt und einem zweiten Blockadeabschnitt ausgeführt und derart in dem Aufnahmeraum angeordnet, dass es sich in einer Ausgangslage mit seinem zweiten Stopperabschnitt an der Stopperfläche abstützt oder der zweite Stopperabschnitt beabstandet von der Stopperfläche angeordnet ist, aber in Kontakt mit der Stopperfläche gebracht werden kann, wenn der zweite Blockadeabschnitt in eine von der Basis fortweisende Richtung bewegt wird, und der zweite Blockadeabschnitt unterhalb der Öffnung angeordnet ist.

In einer bevorzugten Ausführungsform ist in dem Aufnahmeraum ein zweiter Wegbegrenzer angeordnet, gegen den der zweite Blockadeabschnitt und/oder der zweite Aufnahmeabschnitt stößt, wenn der zweite Blockadeabschnitt um einen durch die Lage des zweiten Wegbegrenzers relativ zur Ausgangslage des zweiten Blockadeabschnitts, bzw. des zweiten Aufnahmeabschnitts vorgegebenen maximalen Schwenkweg aus der Ausgangslage gegen die Rückstellkraft verschwenkt wurde.

In einer bevorzugten Ausführungsform ist außerhalb des Aufnahmeraums ein Widerlager angeordnet. Gegen dieses Widerlager kann ein Teil des Bauteils zur Anlage kommen und damit festlegen, wie tief der Kopf in den Aufnahmeraum eingeführt werden kann. Die Lage des Widerlagers relativ zu einer Stopperfläche im Aufnahmeraum, die die Lage des Federelements in Richtung auf das Widerlager bestimmt sowie die Lage eines Blocks des Bauteils, der zur Anlage an dem Widerlager bestimmt ist und die Lage des Kopfs relativ zu diesem Block sowie die Lage der Aufnahme relativ zu einem Stopperabschnitt des Federelements erlauben es, die Lage eines ggf. mit Spiel im Aufnahmeraum befindlichen Federelements zu fixieren, wenn der Block an dem Widerlager anliegt und der Kopf in der Aufnahme des Federelements gehalten wird.

Das erfindungsgemäße Federelement weist eine Basis auf, mit der es sich an einem anderen Bauteil, vorzugsweise einer Begrenzungsfläche des Aufnahmeraums der erfindungsgemäßen Vorrichtung, abstützen kann. Oberhalb der Basis ist eine Aufnahme für einen Kopf eines Bauteils angeordnet.

Das erfindungsgemäße Federelement weist als Teil der Aufnahme einen gebogen oder geknickt ausgeführten Aufnahmeabschnitt eines Federarms des Federelements auf. Ein durch den Aufnahmeabschnitt aufzunehmender Kopf stellt eine Verbreiterung dar. Indem die Aufnahme einen gebogen oder geknickt ausgeführten Aufnahmeabschnitt aufweist, gibt sie dem Kopf Raum. Zugleich ermöglicht es diese Formgebung des Aufnahmeabschnitts, dass ein Kopf zumindest punktuell in Anlage mit dem Aufnahmeabschnitt gerät. In einer bevorzugten Ausführungsform des erfindungsgemäßen Systems ist der Aufnahmeabschnitt an die Form des Kopfes angepasst oder weist einen Kurven- oder Knickverlauf auf, der ein festes, vorzugsweise kraftschlüssiges und/oder formschlüssiges Einklemmen des Kopfes oder Anliegen des Aufnahmeabschnitts an dem Kopf ermöglicht. In einer besonders bevorzugten Ausführungsform ist der Aufnahmeabschnitt ein Flachbandabschnitt.

In einer besonderen Ausführungsform weist der Aufnahmeabschnitt einen Abschnitt auf, der kreisringsegmentförmig oder ellipsenringsegmentförmig ausgeführt ist.

In Bezug auf die Lage des Aufnahmeabschnitts relativ zur Basis gesehen ist bei dem erfindungsgemäßen Federelement weiter entfernt von der Basis als der Aufnahmeabschnitt ein Blockadeabschnitt des Federarms vorgesehen, zu dem der gebogen oder geknickt ausgeführte Aufnahmeabschnitt als Rücksprung ausgebildet ist.

In Bezug auf die Lage des Blockadeabschnitts relativ zur Basis gesehen ist bei dem erfindungsgemäßen Federelement weiter entfernt von der Basis als der Blockadeabschnitt ein Gelenkabschnitt des Federarms vorgesehen, der ein Verschwenken des Aufnahmeabschnitts gegen eine Rückstellkraft, die bei einem verschwenkten Aufnahmeabschnitt in Richtung auf eine Ausgangslage wirkt, ermöglicht.

In Bezug auf die Lage des Blockadeabschnitts relativ zur Basis ist bei dem erfindungsgemäßen Federelement weiter entfernt von der Basis als der Blockadeabschnitt ein Stopperabschnitt des Federarms vorgesehen.

In einer bevorzugten Ausführungsform schließt sich der Blockadeabschnitt unmittelbar an den Aufnahmeabschnitt an. Im eingerasteten Zustand des Kopfs in der Aufnahme verhindert der Blockadeabschnitt ein Lösen des Kopfs aus der Aufnahme, insbesondere durch eine Fläche, welche der Bewegung aus der eingerasteten Position entgegensteht.

In einer besonderen Ausführungsform ist der Blockadeabschnitt bogenförmig ausgeführt, wobei er gegenläufig zum gebogen oder geknickt ausgeführten Aufnahmeabschnitt gebogen ist.

In einer bevorzugten Ausführungsform des erfindungsgemäßen Federelements weist der Aufnahmeabschnitt einen Abschnitt auf, der kreisringsegmentförmig oder ellipsenringsegmentförmig ausgeführt ist.

In einer bevorzugten Ausführungsform des erfindungsgemäßen Federelements ist der Blockadeabschnitt bogenförmig ausgeführt, wobei er gegenläufig zum gebogen oder geknickt ausgeführten Aufnahmeabschnitt gebogen ist.

In einer bevorzugten Ausführungsform des erfindungsgemäßen Federelements schließt sich in Bezug auf die Lage des Blockadeabschnitts relativ zur Basis gesehen weiter entfernt als der Blockadeabschnitt ein geradliniger Einführabschnitt des Federarms an den Blockadeabschnitt an. Der Einführungsabschnitt kann als Führung und/oder Fänger für den Kopf dienen, so dass der Kopf bei nicht optimaler relativer Positionierung zum Aufnahmeabschnitt des Federelements bei Annäherung in die Aufnahme in die richtige Position geführt wird. Der Einführungsabschnitt ist vorzugsweise geradlinig ausgeführt, im Besonderen ein Flachbandabschnitt. Denkbar sind auch leicht geschwungene und/oder polygonartige und/oder kurvenförmige Verläufe des Einführungsabschnitts, um die Funktion des Einfangens des Kopfes umzusetzen.

In einer bevorzugten Ausführungsform des erfindungsgemäßen Federelements ist ein von der Basis aus nach oben weisender Schenkelabschnitt des Federarms vorgesehen.

In einer bevorzugten Ausführungsform des erfindungsgemäßen Federelements ist ein Querverbindungsabschnitt des Federarms vorgesehen, der den Schenkelabschnitt mit dem geradlinigen Einführabschnitt verbindet.

In einer bevorzugten Ausführungsform des erfindungsgemäßen Federelements ist als Teil der Aufnahme ein gebogen oder geknickt ausgeführter, zweiter Aufnahmeabschnitt eines zweiten Federarms des Federelements vorgesehen und in Bezug auf die Lage des zweiten Aufnahmeabschnitts relativ zur Basis gesehen weiter entfernt als der zweite Aufnahmeabschnitt ist ein zweiter Blockadeabschnitt des zweiten Federarms vorgesehen, zu dem der gebogen oder geknickt ausgeführte zweite Aufnahmeabschnitt als Rücksprung ausgebildet ist, In Bezug auf die Lage des zweiten Blockadeabschnitts relativ zur Basis gesehen weiter entfernt als der zweite Blockadeabschnitt ist ein zweiter Gelenkabschnitt des zweiten Federarms vorgesehen, der ein Verschwenken des zweiten Blockadeabschnitts gegen eine Rückstellkraft, die bei einem verschwenkten zweiten Blockadeabschnitt in Richtung auf eine Ausgangslage wirkt, ermöglicht. In Bezug auf die Lage des zweiten Blockadeabschnitts relativ zur Basis gesehen weiter entfernt als der zweite Blockadeabschnitts ist ein zweiter Stopperabschnitt des zweiten Federarms vorgesehen.

Das Material des Federelements ist vorzugsweise Metall. Insbesondere bevorzugt ist das Federelement einstückig ausgeführt, beispielsweise ein durch Umbiegen umgeformtes Flachband. Denkbar wäre zudem eine Herstellung aus anderen Materialien, welche eine hinreichende Elastizität und Festigkeit aufweisen, insbesondere aus Kunststoff oder aus einem Verbundmaterial wie beispielsweise Kohlefaser (CFK) oder Glasfaser (GFK).

In einer bevorzugten Ausführungsform wird das Federelement vor dem Einlegen in das Aufnahmeteil zusammengedrückt, insbesondere um das Einlegen zu ermöglichen. Vorzugsweise ergibt sich insbesondere im eingelegten oder montierten Zustand des Federelements eine Vorspannung in diesem, welche vorzugsweise Abschnitte des Federelements gegen eine oder mehrere Wandungen des Aufnahmeteils drücken.

In einer bevorzugten Ausführungsform weist das Aufnahmeteil einen Block auf, wobei der vorzugsweise vorgesehen Stift vorzugsweise mit dem Block verbunden ist und der Block insbesondere an dem Widerlager anliegt. Unter einem Block kann auch ein willkürlich geformtes zusammenhängendes Objekt verstanden werden, welches sich insbesondere dazu eignet, von einer Aufnahme eingeklemmt oder umgriffen zu werden.

In einer bevorzugten Ausführungsform ist der maximale Durchmesser des Kopfes senkrecht zur Bezugsgeraden, welche vorzugsweise durch den geometrischen Mittelpunkt der Aufnahme verläuft, größer als der maximale Durchmesser der Aufnahme des Federelements bei nicht eingerastetem Zustand oder entspannten Federarmen. Denkbar ist ferner ein im Wesentlichen ähnlicher oder gleicher Durchmesser. Vorzugsweise sind die Aufnahmeabschnitte vorzugsweise eines jeden Federarms bei eingerastetem Zustand näher an den zugeordneten Wegbegrenzern positioniert als bei nicht eingerastetem Zustand. Je nach Abhängigkeit von der Form des Aufnahmeabschnittes kann eine relativ geringe Abstandsdifferenz der Aufnahmeabschnitte zu den Wegbegrenzern bezüglich der beiden Zustände bereits ausreichend sein. In einer besonderen Ausführungsform kommt der Aufnahmeabschnitt mit dem Wegbegrenzer bei eingerastetem Zustand bereits zur Anlage.

In einer ebenfalls bevorzugten Ausführungsform weisen die Wegbegrenzer einen Querschnitt auf, welcher derart geformt ist, dass die Wegbegrenzer zu allen Seiten nicht mit dem Federelement in Berührung kommen, insbesondere in einem nicht eingerasteten Zustand. Vorzugsweise ist der Querschnitt im Wesentlichen an den Aufnahmeraum des Federelements angepasst. Im Besonderen weisen die Wegbegrenzer einen derartigen Querschnitt auf, der im Wesentlichen komplementär ist dem umgebenden Freiraum, welcher insbesondere durch das Federelement begrenzt wird. In einer besonderen Ausführungsform ist der Querschnitt der Wegbegrenzer in Form eines Trapezes, oder Dreiecks oder eines Rechtecks gebildet. Denkbar sind aber auch beliebige Kurven oder bogenförmige Querschnitte, im Besonderen nur abschnittweise.

Die Aufnahme ist insbesondere aus Kunststoff gefertigt, vorzugsweise einstückig. Denkbar wäre ferner die Verwendung von Metall oder einem Verbundmaterial wie beispielsweise Kohlefaser oder Glasfaser. Analoges bezüglich der Materialauswahl gilt für den im Folgenden näher beschriebenen Stift.

Das erfindungsgemäße System weist eine erfindungsgemäße Vorrichtung und ein Bauteil mit einem Kopf, vorzugsweise mit einem Stift und einem am Ende des Stifts des Bauteils angeordneten Kopf auf, wobei der Aufnahmeabschnitt des Federelements teilweise an dem Kopf anliegt. Ist ein Stift vorgesehen, so führt der Stift vorzugsweise durch die Öffnung. Insbesondere bevorzugt weist das erfindungsgemäße System ein erfindungsgemäßes Federelement auf.

In einer bevorzugten Ausführungsform weist das Bauteil einen Block auf, wobei der vorzugsweise vorgesehene Stift vorzugsweise mit dem Block verbunden ist und der Block an dem Widerlager der bevorzugten Ausführungsform der erfindungsgemäßen Vorrichtung anliegt.

Bei dem erfindungsgemäßen Verfahren zum Herausziehen des Kopfs ist vorgesehen, dass
- eine Kraft auf den Kopf aufgebracht wird, die zumindest eine Komponente aufweist, die in Richtung der Bezugsgeraden wirkt,
- ein Kontakt des Kopfes mit dem gebogen oder geknickt ausgeführten Aufnahmeabschnitt ein Verschwenken des Aufnahmeabschnitts gegen die Rückstellkraft bewirkt, so dass der zwischen dem Blockadeabschnitt und dem Distanzpunkt liegende Teil des Federarms in Anlage mit dem Wegbegrenzer kommt,
- und, wenn der zwischen dem Blockadeabschnitt und dem Distanzpunkt liegende Teil des Federarms in Anlage mit dem Wegbegrenzer ist, eine elastische oder (insbesondere bevorzugt) eine plastische Verformung des Federarms stattfindet, bei der der Blockadeabschnitt deformiert wird.

Die Erfindung findet insbesondere bevorzugt beim Befestigen von Anbauteilen, insbesondere bevorzugt solchen aus Kunststoff, an Fahrzeugen Anwendung. Beispielsweise kann die Erfindung beim Befestigen eines Kühlergrills an einem Rahmen eines Fahrzeugs Anwendung finden. Der Kühlergrill ist insbesondere bei Hochgeschwindigkeitsfahrten hohen Drücken ausgesetzt und muss selbst bei diesen ortsfest bleiben. Gleichzeitig gehört der Kühlergrill zu den Bauteilen, die bei einer Frontalkollision mit einem Fußgänger frühzeitig in Kontakt mit dem Fußgänger kommen und zur Vermeidung von Verletzungen vorzugsweise unvermittelt aus dem Rahmen gelöst werden.

Die Erfindung wird nachfolgend anhand eines in den Zeichnungen dargestellten Ausführungsbeispiels näher erläutert.

In den Zeichnungen zeigt:
- Fig. 1: eine Draufsicht eines erfindungsgemäßen Federelements;
- Fig. 2: eine Draufsicht auf einen in den Aufnahmeraum einer ohne Federelement dargestellten Vorrichtung eingeschobenen Kopf eines Stifts eines Bauteils eines erfindungsgemäßen Systems;
- Fig. 3: eine Draufsicht auf einen Kopf eines Stifts eines Bauteils eines erfindungsgemäßen Systems vor dem Einschieben in den Aufnahmeraum einer ohne Federelement dargestellten Vorrichtung;
- Fig. 4: eine Draufsicht auf einen Kopf eines Stifts eines Bauteils eines erfindungsgemäßen Systems vor dem Einschieben in den Aufnahmeraum einer mit Federelement dargestellten Vorrichtung;
- Fig. 5: eine Draufsicht auf einen in den Aufnahmeraum einer mit Federelement dargestellten Vorrichtung eingeschobenen Kopf eines Stifts eines Bauteils eines erfindungsgemäßen Systems und
- Fig. 6: eine Draufsicht auf einen aus dem Aufnahmeraum einer mit Federelement dargestellten Vorrichtung herausgezogenen Kopf eines Stifts eines Bauteils eines erfindungsgemäßen Systems.

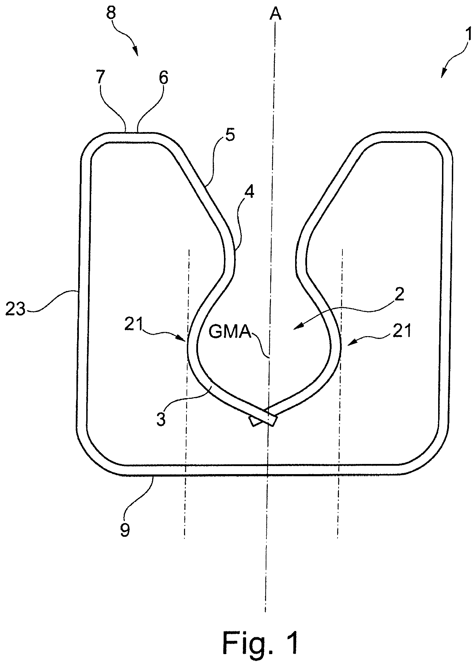

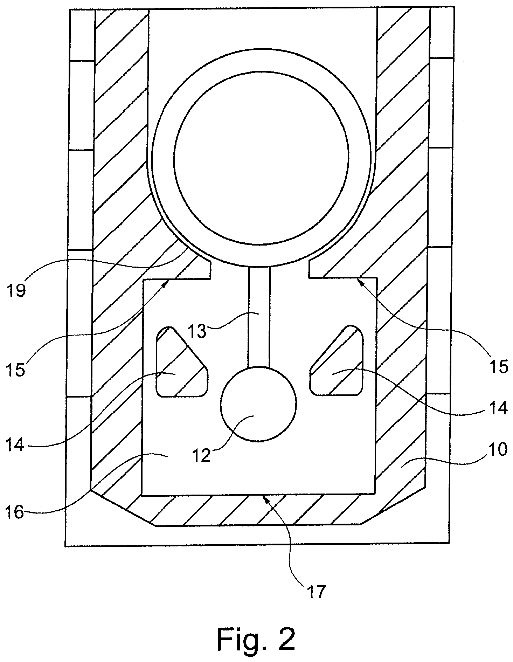

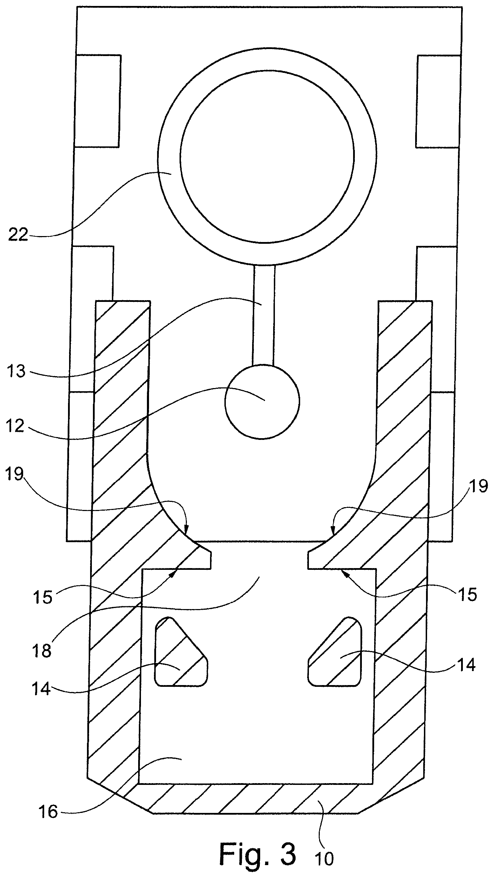

Figur 1 zeigt Federelement für eine Vorrichtung zum Halten eines am Ende eines Stifts 13 (vgl. Fig. 2, 3, 4, 5, 6) eines Bauteils angeordneten Kopfs 12 (vgl. Fig. 2, 3, 4, 5, 6) des Stifts 13. Das Federelement 1 hat eine Basis 9 zum Abstützen des Federelements 1 und eine oberhalb der Basis 9 angeordnete Aufnahme 2 für den Kopf 13. Als Teil der Aufnahme 2 ist ein gebogen ausgeführter Aufnahmeabschnitt 3 eines Federarms des Federelements 1 vorgesehen. In Bezug auf die Lage des Aufnahmeabschnitts 3 relativ zur Basis 9 gesehen oberhalb des Aufnahmeabschnitts 3 ist ein Blockadeabschnitt 4 des Federarms vorgesehen, zu dem der ausgeführte Aufnahmeabschnitt 3 als Rücksprung ausgebildet ist.

In Bezug auf die Lage des Blockadeabschnitts 4 relativ zur Basis 9 gesehen oberhalb des Blockadeabschnitts 4 ist ein Gelenkabschnitt 8 des Federarms vorgesehen, der ein Verschwenken des Aufnahmeabschnitts 3 gegen eine Rückstellkraft, die bei einem verschwenkten Aufnahmeabschnitt 3 in Richtung auf eine Ausgangslage wirkt, ermöglicht. In Bezug auf die Lage des Blockadeabschnitts 4 relativ zur Basis 9 gesehen oberhalb des Blockadeabschnitts 4 ist ein Stopperabschnitt 6 des Federarms vorgesehen.

Der Aufnahmeabschnitt 3 weist einen Abschnitt auf, der ellipsenringsegmentförmig ausgeführt ist. Der Blockadeabschnitt 4 ist bogenförmig ausgeführt, wobei er gegenläufig zum gebogen ausgeführten Aufnahmeabschnitt 3 gebogen ist.

In Bezug auf die Lage des Blockadeabschnitts 4 relativ zur Basis 9 gesehen oberhalb des Blockadeabschnitts 4 schließt sich ein geradliniger Einführabschnitt 5 des Federarms an den Blockadeabschnitt 4 an.

Ferner ist ein von der Basis 9 aus nach oben weisender Schenkelabschnitt 23 des Federarms vorgesehen. Einen Querverbindungsabschnitt 7 des Federarms verbindet den Schenkelabschnitt 23 mit dem geradlinigen Einführabschnitt 5.

Das Federelement 1 ist bezüglich der Bezugsgeraden A spiegelsymmetrisch ausgeführt.

Der als Biegeabschnitt ausgeführte Übergang zwischen dem Einführabschnitt und dem Querverbindungsabschnitt und der als Biegeabschnitt ausgeführte Übergang zwischen dem Querverbindungsabschnitt 7 und dem Schenkelabschnitt 23 bilden Abschnitte des Gelenkabschnitts 8, die insbesondere zu der durch den Gelenkabschnitt 8 bereitgestellten Möglichkeit zum Verschwenken des Federarms beitragen.

Das Federelement 1 ist aus einem gebogenen, insbesondere einstückigen Flachband, insbesondere aus Metall oder Kunststoff oder einem anderen elastischen Material, gefertigt.

In der Figur 1 sind die Enden der Aufnahmeabschnitte 3 im nicht eingerasteten Zustand in Anlage zueinander und können bereits eine Vorspannung aufweisen.

Ferner sind in der Figur 1 parallel zur Bezugsgeraden A Geraden eingezeichnet, welche die Aufnahmeabschnitte 3 berühren, in deren Berührpunkt der Distanzpunkt 21 liegt. Der Abstand der beiden Distanzpunkte 21 entspricht dann dem Durchmesser der Aufnahme 2.

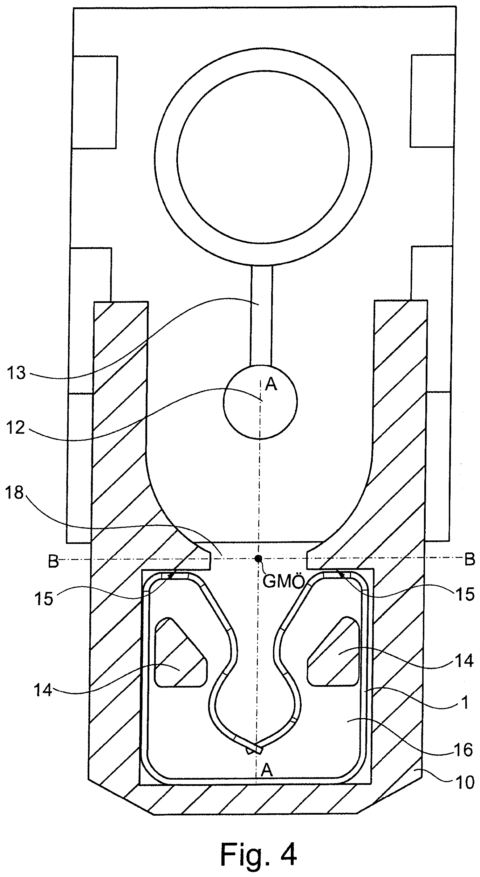

Die als Teil der Fig. 4, 5, 6 dargestellte Vorrichtung zum Halten eines am Ende eines Stifts 13 eines Bauteils angeordneten Kopfs 12 des Stifts 13 hat einen Aufnahmeraum 16, der eine Öffnung 18 aufweist, über die der Kopf 12 des Stifts 13 von außen in den Aufnahmeraum 16 eingeführt werden kann. In dem Aufnahmeraum 16 ist das Federelement 1 angeordnet. Zudem weist der Aufnahmeraum 16 einen Wegbegrenzer 14 auf.

Die Gerade, die den geometrischen Mittelpunkt GMÖ der Öffnung mit dem geometrischen Mittelpunkt GMA der Aufnahme 2 verbindet, wird als Bezugsgerade A bezeichnet. Die Ebene, die den geometrischen Mittelpunkt der Öffnung 18 enthält und senkrecht zur Bezugsgeraden steht, wird als Bezugsebene B bezeichnet. Die Aufnahme 2 wird durch zwei Aufnahmeabschnitte begrenzt, so dass der geometrische Mittelpunkt GMA der Aufnahme 2 der Flächenmittelpunkt der von den Aufnahmeabschnitten eingeschlossenen Fläche ist.

Der Distanzpunkt 21 ist im Vergleich zu anderen Punkten entlang der Erstreckung des gebogen ausgeführten Aufnahmeabschnitts 3 maximal von der Bezugsgeraden A entfernt angeordnet.

Der Wegbegrenzer 14 ist in Bezug auf seine Lage relativ zur der Bezugsebene B näher an der Bezugsebene B angeordnet, als der Distanzpunkt 21 des Aufnahmeabschnitts 3.

In Bezug auf die Lage des Blockadeabschnitts 4 relativ zur Bezugsebene B näher an der Bezugsebene B ist ein Gelenkabschnitt 8 des Federarms 1 vorgesehen, der ein Verschwenken des Aufnahmeabschnitts 3 gegen eine Rückstellkraft, die bei einem verschwenkten Aufnahmeabschnitt 3 in Richtung auf eine Ausgangslage wirkt, ermöglicht, wobei dieses Verschwenken des Aufnahmeabschnitts 3 es ermöglicht, dass ein zwischen dem Blockadeabschnitt 4 und dem Distanzpunkt 21 liegender Teil des Federarms 1 in Anlage mit dem Wegbegrenzer 14 kommt.

Der Aufnahmeraum 16 wird durch eine unten angeordnete Basisfläche 17 und eine oben angeordnete, der Basisfläche 17 zugewandten Stopperfläche 15 begrenzt, wobei sich an die Stopperfläche 15 die Öffnung anschließt.

Das Federelement 1 ist derart in dem Aufnahmeraum 16 angeordnet, dass es sich in einer Ausgangslage mit seiner Basis an der Basisfläche 17 abstützt. Der Stopperabschnitt 6 ist beabstandet von der Stopperfläche 15 angeordnet, kann aber in Kontakt mit der Stopperfläche 15 gebracht werden, wenn der Blockadeabschnitt 4 in die von der Basis 9 fortweisenden Richtung bewegt wird.

Ferner ist eine zweite Stopperfläche 15 vorgesehen, die bezüglich der ersten Stopperfläche 15 auf der gegenüberliegenden Seite der Öffnung 18 angeordnet ist.

Ferner ist ein oberhalb des Aufnahmeraums 16 angeordnetes Widerlager 19 vorgesehen.

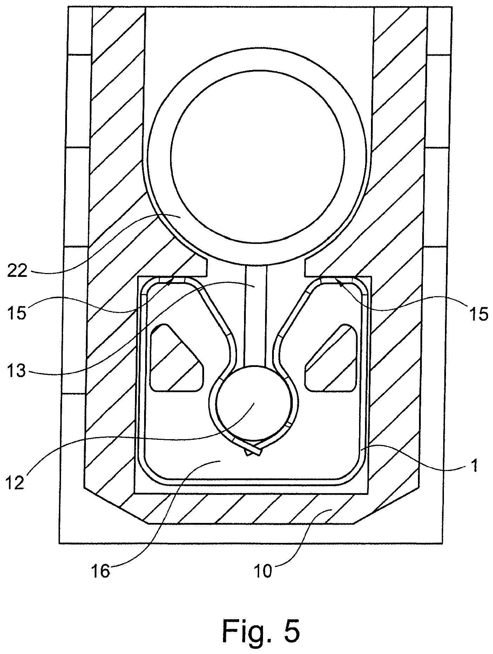

Als Teil des Systems ist an dem Bauteil ein Block 22 vorgesehen, wobei der Stift 13 mit dem Block 22 verbunden ist. Der Block 22 liegt in der in den Fig. 2 und 5 gezeigten Position an dem Widerlager 19 an.

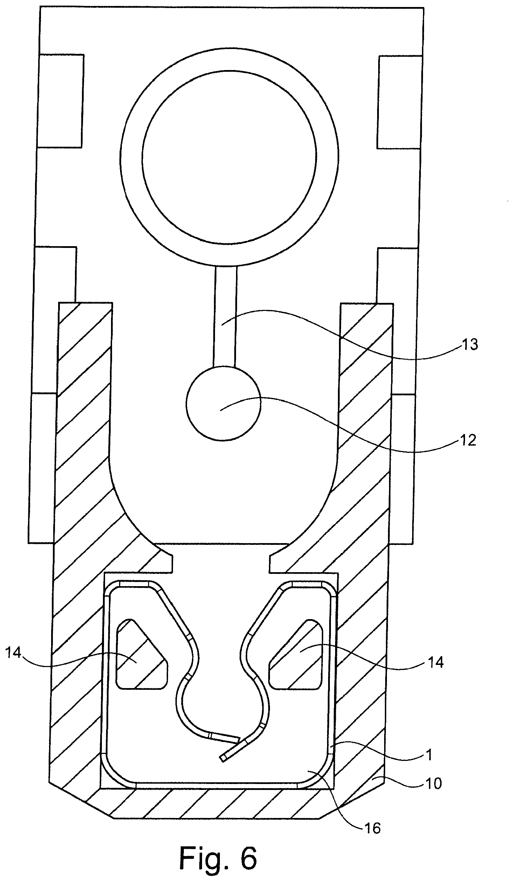

Zum Herausziehen des am Ende des Stifts 13 angeordneten Kopfs 12 des Stifts des Systems wird eine Kraft auf den Stift 13 aufgebracht, die zumindest eine Komponente aufweist, die in Richtung der Bezugsgeraden A wirkt. Ein Kontakt des Kopfes 12 mit dem gebogen oder geknickt ausgeführten Aufnahmeabschnitt 3 bewirkt ein Verschwenken des Aufnahmeabschnitts 3 gegen die Rückstellkraft, so dass der zwischen dem Blockadeabschnitt 4 und dem Distanzpunkt 21 liegende Teil des Federarms in Anlage mit dem Wegbegrenzer 14 kommt. Wenn der zwischen dem Blockadeabschnitt 4 und dem Distanzpunkt 21 liegende Teil des Federarms in Anlage mit dem Wegbegrenzer 14 ist, findet eine elastische oder plastische Verformung des Federarms statt, bei der der Blockadeabschnitt 4 deformiert wird. Fig. 6 zeigt den plastisch deformierten Blockadeabschnitt 4.

## Patentansprüche

1. Vorrichtung zum Halten eines an einem Bauteil angeordneten Kopfs (12), mit einem Aufnahmeraum (16), der eine Öffnung (18) aufweist, über die der Kopf (12) von außen in den Aufnahmeraum (16) eingeführt werden kann, und einem in dem Aufnahmeraum (16) angeordneten Federelement (1) und einem in dem Aufnahmeraum (16) angeordneten Wegbegrenzer (14),
• wobei das Federelement (1) eine Aufnahme (2) für den Kopf (12) des Bauteils aufweist, und
• die Gerade, die den geometrischen Mittelpunkt (GMÖ) der Öffnung (18) mit dem geometrischen Mittelpunkt (GMA) der Aufnahme (2) verbindet, eine Bezugsgerade (A) bildet, und die Ebene, die den geometrischen Mittelpunkt (GMÖ) der Öffnung (18) enthält und senkrecht zur Bezugsgeraden (A) steht, eine Bezugsebene (B) bildet,
• wobei als Teil der Aufnahme (2) ein gebogen oder geknickt ausgeführter Aufnahmeabschnitt (3) eines Federarms des Federelements (1) vorgesehen ist, wobei der gebogen oder geknickt ausgeführte Aufnahmeabschnitt (3) zumindest einen Distanzpunkt (21) aufweist, der im Vergleich zu anderen Punkten entlang der Erstreckung des gebogen oder geknickt ausgeführten Aufnahmeabschnitts (3) maximal von der Bezugsgeraden (A) entfernt angeordnet ist und
• in Bezug auf die Lage des Aufnahmeabschnitts (3) relativ zu der Bezugsebene (B) gesehen näher an der Bezugsebene (B) als der Aufnahmeabschnitt (3) ein Blockadeabschnitt (4) des Federarms (1) vorgesehen ist, zu dem der gebogen oder geknickt ausgeführte Aufnahmeabschnitt (3) als Rücksprung ausgebildet ist, und
• der Wegbegrenzer (14) in Bezug auf seine Lage relativ zur der Bezugsebene (B) näher an der Bezugsebene (B) angeordnet ist als der Distanzpunkt (21) des Aufnahmeabschnitts (3), **dadurch gekennzeichnet dass**,
• in Bezug auf die Lage des Blockadeabschnitts (4) relativ zur Bezugsebene (B) näher an der Bezugsebene (B) als der Blockadeabschnitt (4) ein Gelenkabschnitt (8) des Federarms (1) vorgesehen ist, der ein Verschwenken des Aufnahmeabschnitts (3) gegen eine Rückstellkraft, die bei einem verschwenkten Aufnahmeabschnitt (3) in Richtung auf eine Ausgangslage wirkt, ermöglicht, wobei dieses Verschwenken des Aufnahmeabschnitts (3) es ermöglicht, dass ein zwischen dem Blockadeabschnitt (4) und dem Distanzpunkt (21) liegender Teil des Federarms (1) in Anlage mit dem Wegbegrenzer (14) kommt.

2. Vorrichtung nach Anspruch 1, **dadurch gekennzeichnet, dass** das Federelement (1) durch ein Federelement für eine Vorrichtung zum Halten eines an einem Bauteil angeordneten Kopfs (12) gebildet wird, wobei das Federelement (1) eine Basis (9) zum Abstützen des Federelements (1) und eine oberhalb der Basis (9) angeordnete Aufnahme (2) für den Kopf (12) des Bauteils aufweist, wobei
• als Teil der Aufnahme (2) ein gebogen oder geknickt ausgeführter Aufnahmeabschnitt (3) eines Federarms des Federelements (1) vorgesehen ist und
• in Bezug auf die Lage des Aufnahmeabschnitts (3) relativ zur Basis (9) gesehen weiter entfernt von der Basis (9) als der Aufnahmeabschnitt ein Blockadeabschnitt (4) des Federarms vorgesehen ist, zu dem der gebogen oder geknickt ausgeführte Aufnahmeabschnitt (3) als Rücksprung ausgebildet ist, und
• in Bezug auf die Lage des Blockadeabschnitts (4) relativ zur Basis (9) gesehen weiter entfernt von der Basis (9) als der Blockadeabschnitt (4) ein Gelenkabschnitt (8) des Federarms vorgesehen ist, der ein Verschwenken des Aufnahmeabschnitts (3) gegen eine Rückstellkraft, die bei einem verschwenkten Aufnahmeabschnitt (3) in Richtung auf eine Ausgangslage wirkt, ermöglicht, und
• in Bezug auf die Lage des Blockadeabschnitts (4) relativ zur Basis (9) gesehen weiter entfernt von der Basis (9) als der Blockadeabschnitt (4) ein Stopperabschnitt (6) des Federarms vorgesehen ist.

3. Vorrichtung nach Anspruch 2, **dadurch gekennzeichnet, dass** der Aufnahmeabschnitt (3) einen Abschnitt aufweist, der kreisringsegmentförmig oder ellipsenringsegmentförmig ausgeführt ist.

4. Vorrichtung nach Anspruch 2 oder 3, **dadurch gekennzeichnet, dass** der Blockadeabschnitt (4) bogenförmig ausgeführt ist, wobei er gegenläufig zum gebogen oder geknickt ausgeführten Aufnahmeabschnitt (3) gebogen ist.

5. Vorrichtung nach Anspruch 4, **dadurch gekennzeichnet, dass** der Aufnahmeraum (16) zumindest durch eine unten angeordnete Basisfläche (17) und eine oben angeordnete, der Basisfläche (17) zugewandten Stopperfläche (15) begrenzt wird, wobei sich an die Stopperfläche (15) die Öffnung anschließt, wobei das Federelement (1) derart in dem Aufnahmeraum (16) angeordnet ist, dass es sich in einer Ausgangslage mit seiner Basis an der Basisfläche (17) abstützt und mit seinem Stopperabschnitt (6) an der Stopperfläche (15) abstützt oder der Stopperabschnitt (6) beabstandet von der Stopperfläche (15) angeordnet ist, aber in Kontakt mit der Stopperfläche (15) gebracht werden kann, wenn der Blockadeabschnitt (4) in eine von der Basis (9) fortweisenden Richtung bewegt wird.

6. Vorrichtung nach Anspruch 5, **gekennzeichnet durch** eine zweite Stopperfläche (15), die bezüglich der (ersten) Stopperfläche (15) auf der gegenüberliegenden Seite der Öffnung (18) angeordnet ist, wobei das Federelement (1) mit einem zweiten Stopperabschnitt (6) und einem zweiten Blockadeabschnitt (4) ausgeführt ist und das Federelement (1) derart in dem Aufnahmeraum (16) angeordnet ist, dass es sich in einer Ausgangslage mit seinem zweiten Stopperabschnitt (6) an der Stopperfläche (15) abstützt oder der zweite Stopperabschnitt (6) beabstandet von der Stopperfläche (15) angeordnet ist, aber in Kontakt mit der Stopperfläche (15) gebracht werden kann, wenn der zweite Blockadeabschnitt (4) in eine von der Basis (9) fortweisenden Richtung bewegt wird, und der zweite Blockadeabschnitt (4) unterhalb der Öffnung (18) angeordnet ist.

7. Vorrichtung nach einem der vorigen Ansprüche, **gekennzeichnet durch** ein außerhalb des Aufnahmeraums (16) angeordnetes Widerlager (19).

8. System mit einer Vorrichtung nach einem der vorigen Ansprüche und einem Bauteil mit Kopf (12), wobei der Aufnahmeabschnitt (3) des Federelements (1) an dem Kopf (12) anliegt.

9. System nach Anspruch 8 soweit rückbezogen auf Anspruch 7, **dadurch gekennzeichnet, dass** das Bauteil einen Block (22) aufweist und der Block (22) an dem Widerlager (19) anliegt.

10. Verfahren zum Herausziehen des an dem Bauteil angeordneten Kopfs (12) des Systems gemäß einem der Ansprüche 8 bis 9, **dadurch gekennzeichnet, dass**
• eine Kraft auf den Kopf (12) aufgebracht wird, die zumindest eine Komponente aufweist, die in Richtung der Bezugsgeraden (A) wirkt,
• ein Kontakt des Kopfes (12) mit dem gebogen oder geknickt ausgeführten Aufnahmeabschnitt (3) ein Verschwenken des Aufnahmeabschnitts (3) gegen die Rückstellkraft bewirkt, so dass der zwischen dem Blockadeabschnitt (4) und dem Distanzpunkt (21) liegende Teil des Federarms in Anlage mit dem Wegbegrenzer (14) kommt,
• und, wenn der zwischen dem Blockadeabschnitt (4) und dem Distanzpunkt (21) liegende Teil des Federarms in Anlage mit dem Wegbegrenzer (14) ist, eine elastische oder plastische Verformung des Federarms stattfindet, bei der der Blockadeabschnitt (4) deformiert wird.

11. Verwendung einer Vorrichtung nach einem der Ansprüche 1 bis 7 und/oder eines Systems nach einem der Ansprüche 8 oder 9 zur Durchführung eines Verfahrens nach Anspruch 10.

## Claims

1. Device for holding a head (12) arranged on a component, said device having a receiving space (16) which has an opening (18) via which the head (12) can be inserted into the receiving space (16) from outside and a spring element (1) arranged in the receiving space (16) and a path limiter (14) arranged in the receiving space (16),
• wherein the spring element (1) has a receiving mean (2) for the head (12) of the component and
• the straight line, which connects the geometric centre point (GMÖ) of the opening (18) to the geometric centre point (GMA) of the receiving mean, (2) forms a reference line (A) and the plane, which contains the geometric centre point (GMÖ) of the opening (18) and is perpendicular to the reference line (A), forms a reference plane (B),
• wherein a curved or bent receiving portion (3) of a spring arm of the spring element (1) is provided as part of the receiving mean (2), wherein the curved or bent receiving portion (3) has at least one distance point (21) which is arranged furthest away from the reference line (A) by comparison with other points along the extent of the curved or bent receiving portion (3) and
• in relation to the position of the receiving portion (3) viewed relative to the reference plane (B), a blocking portion (4) of the spring arm (1), with respect to which the curved or bent receiving portion (3) is designed as a recess, is provided closer to the reference plane (B) than the receiving portion (3) and
• the path limiter (14) with respect to its position relative to the reference plane (B) is arranged closer to the reference plane (B) than the distance point (21) of the receiving portion (3), **characterized in that**
• in relation to the position of the blocking portion (4) relative to the reference plane (B), a joint portion (8) of the spring arm (1), which allows the receiving portion (3) to pivot against a restoring force acting in the direction of a starting position when the receiving portion (3) is pivoted, is closer to the reference plane (B) than the blocking portion (4), wherein this pivoting of the receiving portion (3) allows a part of the spring arm (1) lying between the blocking portion (4) and the distance point (21) to bear against the path limiter (14).

2. Device according to Claim 1, **characterized in that** the spring element (1) is formed by a spring element for a device for holding a head (12) arranged on a component, wherein said spring element (1) has a base (9) for supporting the spring element (1) and a receiving mean (2) arranged above said base (9) for the head (12) of the component, wherein
• a curved or bent receiving portion (3) of a spring arm of the spring element (1) is provided as part of the receiving mean (2) and
• in relation to the position of the receiving portion (3) viewed relative to the base (9), a blocking portion (4) of the spring arm, with respect to which the curved or bent receiving portion (3) is designed as a recess, is provided further away from the base (9) than the receiving portion and
• in relation to the position of the blocking portion (4) viewed relative to the base (9), a joint portion (8) of the spring arm, which allows the receiving portion (3) to pivot against a restoring force acting in the direction of a starting position when the receiving portion (3) is pivoted, is provided further away from the base (9) than the blocking portion (4) and
• in relation to the position of the blocking portion (4) viewed relative to the base (9), a stopper portion (6) of the spring arm is provided further away from the base (9) than the blocking portion (4).

3. Device according to Claim 2, **characterized in that** the receiving portion (3) has a portion which is shaped as a circular ring segment or as an elliptical ring segment.

4. Device according to Claim 2 or 3, **characterized in that** the blocking portion (4) is arcuate, wherein it is curved in the opposite direction to the curved or bent receiving portion (3).

5. Device according to Claim 4, **characterized in that** the receiving space (16) is delimited at least by a base surface (17) arranged at the bottom and by a stopper surface (15) which is arranged at the top and faces the base surface (17), wherein the opening adjoins the stopper surface (15), wherein the spring element (1) is arranged in the receiving space (16) in such a manner that it is supported with its base on the base surface (17) in a starting position and is supported with its stopper portion (6) on the stopper surface (15) or in such a manner that the stopper portion (6) is arranged spaced apart from the stopper surface (15) but can be brought into contact with the stopper surface (15) when the blocking portion (4) is moved in a direction pointing away from the base (9).

6. Device according to Claim 5, **characterized by** a second stopper surface (15) which is arranged on the opposite side of the opening (18) with respect to the (first) stopper surface (15), wherein the spring element (1) is designed with a second stopper portion (6) and a second blocking portion (4), and the spring element (1) is arranged in the receiving space (16) in such a manner that it is supported with its second stopper portion (6) on the stopper surface (15) in a starting position or in such a manner that the second stopper portion (6) is arranged spaced apart from the stopper surface (15) but can be brought into contact with the stopper surface (15) when the second blocking portion (4) is moved in a direction pointing away from the base (9) and the second blocking portion (4) is arranged beneath the opening (18).

7. Device according to one of the preceding claims, **characterized by** an abutment (19) arranged outside the receiving space (16).

8. System having a device according to one of the preceding claims and a component having a head (12), wherein the receiving portion (3) of the spring element (1) rests against the head (12).

9. System according to Claim 8, to this extent appendant to Claim 7, **characterized in that** the component has a block (22) and the block (22) rests against the abutment (19).

10. Method for pulling out the head (12) arranged on the component of the system according to one of Claims 8 to 9, **characterized in that**
• a force is applied to the head (12), said force having at least one component acting in the direction of the reference line (A),
• a contact of the head (12) with the curved or bent receiving portion (3) causes the receiving portion (3) to pivot counter to the restoring force, so that the part of the spring arm lying between the blocking portion (4) and the distance point (21) bears against the path limiter (14)
• and when the part of the spring arm lying between the blocking portion (4) and the distance point (21) bears against the path limiter (14), elastic or plastic deformation of the spring arm takes place, during which the blocking portion (4) is deformed.

11. Use of a device according to one of Claims 1 to 7 and/or of a system according to one of Claims 8 or 9 for performing a method according to Claim 10.

## Revendications

1. Dispositif pour maintenir une tête (12) disposée sur une pièce, avec un espace de réception (16), qui présente une ouverture (18) permettant d'introduire la tête (12) par l'extérieur dans l'espace de réception (16), ainsi qu'un élément ressort (1) disposé dans l'espace de réception (16) et un limiteur de course (14) disposé dans l'espace de réception (16),
• l'élément ressort (1) présentant un logement (2) pour la tête (12) de la pièce, et
• la droite reliant le centre géométrique (GMÖ) de l'ouverture (18) au centre géométrique (GMA) du logement (2) constitue une droite de référence (A), et le plan contenant le centre géométrique (GMÖ) de l'ouverture (18) et s'étendant perpendiculairement à la droite de référence (A) constitue un plan de référence (B),
• une section de logement (3) courbée ou pliée d'un bras élastique de l'élément ressort (1) est prévue comme partie du logement (2), ladite section de logement (3) courbée ou pliée présentant au moins un point de distance (21) qui est disposé par comparaison à d'autres points le long du prolongement de la section de logement (3) courbée ou pliée à une distance maximale de la droite de référence (A) et
• concernant la position de la section de logement (3) par rapport au plan de référence (B) une section de blocage (4) du bras élastique (1) est prévue plus proche du plan de référence (B) que la section de logement (3) et pour laquelle la section de logement (3) courbée ou pliée est conçue sous la forme d'un renfoncement, et
• le limiteur de course (14) est disposé, concernant sa position par rapport au plan de référence (B), plus proche du plan de référence (B) que le point de distance (21) de la section de logement (3), **caractérisé en ce que**
• concernant la position de la section de blocage (4) par rapport au plan de référence (B), une section d'articulation (8) du bras élastique (1) est prévue plus proche du plan de référence (B) que la section de blocage (4) et permet un pivotement de la section de logement (3) à l'encontre d'une force de rappel qui agit en direction d'une situation initiale, lorsque la section de logement (3) est pivotée, ce pivotement de la section de logement (3) permettant qu'une partie du bras élastique (1) située entre la section de blocage (4) et le point de distance (21) vienne en appui contre le limiteur de course (14).

2. Dispositif selon la revendication 1, **caractérisé en ce que** l'élément ressort (1) est formé par un élément ressort pour un dispositif destiné à maintenir une tête (12) disposée sur une pièce, l'élément ressort (1) présentant une base (9) pour soutenir l'élément ressort (1) et un logement (2) disposé au-dessus de la base (9) pour la tête (12) de la pièce, dans lequel
• une section de logement (3) courbée ou pliée d'un bras élastique de l'élément ressort (1) est prévue comme partie du logement (2) et
• concernant la position de la section de logement (3) par rapport à la base (9), une section de blocage (4) du bras élastique est prévue plus éloignée de la base (9) que la section de logement et pour laquelle la section de logement (3) courbée ou pliée est conçue sous la forme d'un renfoncement, et
• concernant la position de la section de blocage (4) par rapport à la base (9), une section d'articulation (8) du bras élastique est prévue plus éloignée de la base (9) que la section de blocage (4) et permet un pivotement de la section de logement (3) à l'encontre d'une force de rappel qui agit en direction d'une situation initiale, lorsque la section de logement (3) est pivotée, et
• concernant la position de la section de blocage (4) par rapport à la base (9), une section d'arrêt (6) du bras élastique est prévue plus éloignée de la base (9) que la section de blocage (4).

3. Dispositif selon la revendication 2, **caractérisé en ce que** la section de logement (3) présente une section qui est réalisée en forme de segment d'anneau circulaire ou en forme de segment d'anneau elliptique.

4. Dispositif selon la revendication 2 ou 3, **caractérisé en ce que** la section de blocage (4) est réalisée en forme d'arc, en étant courbée en sens inverse de la section de logement (3) courbée ou pliée.

5. Dispositif selon la revendication 4, **caractérisé en ce que** l'espace de réception (16) est délimité au moins par une surface de base (17) disposée en bas et une surface d'arrêt (15) disposée en haut et tournée vers la surface de base (17), l'ouverture se raccordant à la surface d'arrêt (15), l'élément ressort (1) étant disposé dans l'espace de réception (16) de telle sorte que, dans une situation initiale, il s'appuie avec sa base sur la surface de base (17) et s'appuie avec sa section d'arrêt (6) sur la surface d'arrêt (15) ou que la section d'arrêt (6) est disposée à distance de la surface d'arrêt (15), mais peut être amenée en contact avec la surface d'arrêt (15) lorsque la section de blocage (4) est déplacée dans une direction s'éloignant de la base (9).

6. Dispositif selon la revendication 5, **caractérisé par** une deuxième surface d'arrêt (15) qui est disposée sur le côté opposé de l'ouverture (18) par rapport à la (première) surface d'arrêt (15), l'élément ressort (1) étant réalisé avec une deuxième section d'arrêt (6) et une deuxième section de blocage (4) et l'élément ressort (1) étant disposé dans l'espace de réception (16) de telle sorte que, dans une situation initiale, il s'appuie avec sa deuxième section d'arrêt (6) sur la surface d'arrêt (15) ou que la deuxième section d'arrêt (6) est disposée à distance de la surface d'arrêt (15), mais peut être amenée en contact avec la surface d'arrêt (15) lorsque la deuxième section de blocage (4) est déplacée dans une direction s'éloignant de la base (9), et la deuxième section de blocage (4) est disposée au-dessous de l'ouverture (18).

7. Dispositif selon l'une des revendications précédentes, **caractérisé par** une butée (19) disposée à l'extérieur de l'espace de réception (16).

8. Système comprenant un dispositif selon l'une des revendications précédentes et une pièce avec une tête (12), dans lequel la section de logement (3) de l'élément ressort (1) est en appui contre la tête (12).

9. Système selon la revendication 8, en référence à la revendication 7, **caractérisé en ce que** la pièce présente un bloc (22) et **en ce que** le bloc (22) est en appui contre la butée (19).

10. Procédé d'extraction de la tête (12) du système disposée sur la pièce selon l'une des revendications 8 à 9, **caractérisé en ce que**
• une force est appliquée à la tête (12), laquelle présente au moins une composante qui agit dans la direction de la droite de référence (A),
• un contact de la tête (12) avec la section de logement (3) courbée ou pliée provoque un pivotement de la section de logement (3) à l'encontre de la force de rappel, de telle sorte que la partie du bras élastique située entre la section de blocage (4) et le point de distance (21) vient en appui contre le limiteur de course (14),
• et, lorsque la partie du bras élastique située entre la section de blocage (4) et le point de distance (21) est en appui contre le limiteur de course (14), une déformation élastique ou plastique du bras élastique se produit, dans laquelle la section de blocage (4) est déformée.

11. Utilisation d'un dispositif selon l'une des revendications 1 à 7 et/ou d'un système selon l'une des revendications 8 ou 9 pour la mise en oeuvre d'un procédé selon la revendication 10.
